# EUROPEAN PATENT APPLICATION

(11) **EP 1 745 981 A1**
(43) Date of publication of application: **24.01.2007**
(21) Application number: 05397015.8
(22) Date of filing: 20.07.2005
(51) Int. Cl.: B60P 3/08, B60P 1/54

(54) **A transport unit, a transport system and a method**

(71) Applicant: Permar Oy, 01620 Vantaa (FI)
(72) Inventor: Rapeli, Pekka E., 01620, Vantaa (FI)
(74) Representative: Rahkonen, Erkki Juhani

(57) **Abstract**

A transport unit for transporting cargo, which cargo is a car (8), a car body (56) or other cargo (57). A transport unit comprises a lift and transfer apparatus (6), which is placed inside said transport unit (1), arranged during the loading of the transport unit (1) to extend outside the transport unit (1), to grip to a transfer platform (2), on top of which the cargo is placed, to lift said transfer platform (2) that is outside the transport unit (1) inside the transport unit (1), and to transfer the transfer platform (2) to its place in the transport unit (1), as well as during the unloading of the transport unit (1) to transfer the transfer platform (2) outside the transport unit (1). In an embodiment the transport unit (1) is a cargo container, and a trailer is used for transport in an embodiment. The system utilizing cargo containers enables transporting cars from the assembly plant directly to the retail dealer.

## Description

The invention relates to a transport unit for cargo, a method for transporting cars in a cargo container from an assembly plant to a car retail dealer, and the use of a transport unit for unloading one or more cars from a transport unit fitted into a transport trailer.

A transport unit in this description refers to a construction, and an apparatus connected to it, wherein the goods or cargo being transported are placed for transport. Preferably the transport unit comprises a closed space and it can be loaded or changed from one transport means to another. The transport unit with its apparatus can form a permanent part of a transport means as well.

The yearly production of cars in the world exceeds several tens of millions units. The globalisation of car industry and the centralization of car manufacture have lead to an increasing need to transport cars between continents and countries. Especially the need to distribute the manufactured cars from the assembly plant to retailer dealers fast, efficiently and without damages has been emphasized. The distribution of cars equipped with customer-specific features from the assembly plant to a retail dealer and further to the end user has also increased.

The car transport systems according to prior art are based on specified devices and systems that have been developed for this purpose. Sea transports of cars are carried out, for example, with special transport ships (PCTC, Pure Car Truck Carrier), as an example of which can be mentioned document EP 0680434 B1, with car transport ships, as rail transport, as an example of which can be mentioned documents WO 02/076804 A1 and WO 02/076803 A1, and as car trailer transports. Unloading and loading cars and car transport containers in ports requires special arrangements, as an example of which can be mentioned document EP 0776312 B1. According to prior art, cars are transported in cargo containers, to which the cars are loaded by using different kinds of frames, palettes or transfer platforms, to which it is possible to attach 1 or 2 cars. The transfer platforms with their cars are lifted and transferred, for example, to car trailers and out of them by using lift and transfer device constructed for that purpose, which devices are placed in the loading and unloading locations.

A problem with those special devices, which relate to loading cars into, for example, containers, ships or car transport trailers, is especially that the different systems are not compatible. This restricts the operation of a transport system significantly or adds expenses, because several parallel systems must be constructed. The necessary systems are different, for example, in the USA and in Europe. In addition, there are differences in the operation and technology of the transport system between car manufacturers. Agreeing on common standards and practices may even be impossible, because the conventional systems and even the dimensioning have been different.

Cars are loaded according to prior art also to standard sized cargo containers, inside which have been built the necessary equipment for suspending cars at a desired height and in order to maximize the space used. An obstacle for the wider use of transport systems is their difficulty of use and the separate lift and transfer devices required for loading/unloading cars. A specific problem is also that the car transport containers are useful only for transporting cars, and therefore the containers in question are returned even empty, or their capacity is not used to the fullest. A specific problem is created by special railway carriages or car transport trailers and other system that cannot be used for transporting anything else than cars. The transport units of this type of systems are generally returned empty.

Still one problem in the car transport systems is created by the fact that each car may be handled all together 15 to 25 times in the different phases of the supply chain, when the supply chain is examined from the assembly plant all the way to the customer, and therefore the chance of damages is very notable. In addition to the sea transport phase the loading of cars taking place in a hurry, including transfer runs and lockings, increase the risk of damages. The increasing car transports in RORO ships also show that the risk of transport damages is alarmingly high. Even small damages cause car returns, additional expenses, delays in delivery and dissatisfaction among customers. An efficient protection of a car causes additional expenses and even complicates the transport. The need for a more efficient protection is obvious.

The purpose of the present invention is to remove and decrease the above-mentioned problems related to prior art.

The purpose of the invention is to enable a supply chain, through which the cars with customer-specific features are delivered in delivery lots of 3 to 4 cars in a fast and reliable manner, directly from the assembly plant to the retail dealer close to the customer. The supply chain is simplified significantly, it complements the present distribution logistics and speeds up the delivery of customer-specifically outfitted cars.

When the delivery lot includes 3 to 4 cars, the number of handling and control units in the supply chain is decreased as much as 75% and the total amount of handling events is decreased as much as 90%. By means of the invention a shift is made from the manual handling of cars to a highly mechanized handling of cargo containers and the utilization of container logistics, when the transport unit applying the invention is a standardized cargo container. The cars placed on transfer platforms from the production line of an assembly plant are transported to a loading station, or for example, on conveyor tracks to an automated elevated storage, which operates as a buffer storage, and which significantly decreases the area required by storing cars. The cars are sorted according to delivery addresses. The handling of cars in the elevated storage is integrated to the loading of cars to, for example, cargo containers, especially if there are transfer platforms in use, on which the cars are attached.

The invention is flexibly applied in cargo containers with different lengths, which include especially a 20', 40' or 45' sea container, as well as a 48' or 53' so-called domestic container, which are used in the USA and, if necessary, also in PCTC ships. In longer units, it is possible to transport 4 to 6 cars depending on the car sizes.

Large logistic operators can by means of the cargo container applied in the invention offer new logistic services to car industry, because the cargo container is suitable for the transportation of cars, as well as their bodies, parts and modules, and for transporting tyreless cars by means of a transfer platform. Especially the use of a transfer platform enables both the transport of car bodies to an assembly plant, and the transport of finished cars in the same container to the retail dealer. The use of cargo containers enables, for example, the rail transport of cars from Europe through Russia to Asia. The transport time becomes as much as 50% shorter than with sea transport and the world-wide container logistics enable the implementation of multi-modal transports, in which case moving the cargo containers from one transport means to another is fast. The container logistics also utilizes container-specific monitoring systems, in which case, for example, RFID technology (Radio Frequency Identification) or GPS sensors (Global Positioning System) are applied. The ability to place the lift and transfer apparatus to the upper part of an HC cargo container in such a manner that a capacity corresponding to a standard container remains in use is especially important for the handling of return cargo.

The cars are finished at the assembly plant and the inspections preceding the delivery are performed only at the assembly plant. The invention eliminates the transport damages of cars almost entirely. The cars are shut out of sight into the same cargo container or transport unit for the entire duration of the delivery. Shutting the cars out of sight increases the safety of the transport and prevents e.g. intentional damaging attempts, contamination caused by, for example, birds and the effects of weather.

The invention utilizes a transfer platform, on which the car is tied and by means of which the handling of different kinds of cars can be standardized. The operations of the transfer platform are matched with the container. A standardized transfer platform enables the mechanization of car handling in an assembly plant at the end of production, as well as in buffer storage. The same transfer platform can be utilized when handling the car at the end of a supply chain and when the car is locked in place during delivery in a reliable manner and in order to prevent damages. The transfer platform can be utilized, for example, in loading return cargo to the cargo container, and therefore the transfer platform can be handled by, for example, a forklift.

The purpose of the invention is to enable a car transport system, which minimizes damage risks, improves safety, does not require the use of separate lift and transfer devices at car loading and unloading points, especially in the terminals of the retail dealers, enables the utilization of a cargo container in transporting return cargo in a manner that corresponds to the handling of cargo containers of the same size and type, and suitability for ship, train and car transport.

Both the unloading and loading of cars takes place by means of a transport unit according to the invention, and thus the transport unit can be on top of the container transport trailer. The re-loading of cars is possible by means of the lift and transfer apparatus of the transport unit. The transport unit can also be used as a temporary storage, for example, by the retail dealer. The container storage requires 50 to 80% less space than conventional storage at an open field or a garage. At the same time, the cars are protected, as was mentioned above.

The technical systems of the transport unit are constructed in such a manner that they can be taken into use easily for car transport, but for transporting return cargo said systems are packed in the cargo container used as a transport unit in such a manner that they do not limit the use of standard sized loads in loading return cargo. The systems are placed in the upper part of the transport unit. Placing the lift and transfer apparatus in the upper part of the cargo container enables the use of the cargo container both for regular transports of general cargo and the transports of car parts, because then a space corresponding to a standard container is in use for cargo.

The transport unit for transporting cargo according to the invention is presented in claim 1.

A method for transporting cars in a cargo container from an assembly plant to a car retail dealer according to the invention is presented in claim 16.

The use of a transport unit according to the invention for unloading one or more cars from a transport unit fitted into a transport trailer is presented in claim 24.

A cargo container ―based transport system for transporting and delivering cargo has become widely general. Everywhere in the world there are container ports, container terminals and a container transport network based on land transport. A cargo container itself has a widely spread standard dimensioning and compatibility, a simple construction, a large effective load and a strong construction, which simplifies the systems and speeds up the handling. For example the North American continent has an effective railway system and transporting even two containers on top of each other in a railway car is possible.

The share of the order-led production of cars varies depending on the brand; it is on the level of 35% to 50% on average in Europe, and for some brands it is even 90%. The transport system according to the invention enables the means of flexible control even in order-led production.

A specific advantage is that in the supply chain it is possible to utilize the control principle of a dynamic, moving storage, where small delivery lots are sent forward frequently. Advantages to be gained are the decrease of tied equities, cost savings, improvement of delivery security and the increase of customer satisfaction because of fast delivery. The invention eliminates the transport damages of cars almost entirely.

The transport unit enables the transport of cars, car bodies and other varying cargo. The transport unit or cargo container comprise the required lift and transfer apparatus, which enables especially the distribution of cars all the way to the retail dealer. The handling of other cargo as well becomes significantly easier by means of the presented lift and transfer apparatus and it enables the mechanization of handling, for example, by means of conveyor tracks. The cars do not need to be removed from the transport unit or the cargo container in the mid-stages of transport, which unit or container operate both as an efficient protection and prevent vandalism and thefts. Handling the cars is not necessary, even though the transport means of the transport unit or cargo container changes. Handlings that are no longer needed are, e.g. removing car-specific lockings, local transfers, sorting according to delivery address, and re-lockings.

If the lift and transfer apparatus is applied elsewhere than in the cargo container, because of the protection the unit in question must preferably be closed, lockable and durable. The invention can be applied, for example, in car transport trailers, whose wall and roof structures form the necessary space for cargo.

The apparatus according to the invention for transporting cars and return cargo can also be applied in regionally limited transport systems, which utilize cargo container ―like transport units, in which case the dimensioning of the transport unit used may differ from the dimensioning of standard containers. Different delivery trucks or transport trailers for transporting varying cargo can be equipped, either permanently or temporarily, with said transport unit or the lift and transfer apparatus of the invention, as well as railway carriages. The transport units also form a swapbody, if necessary. Placing the lift and transfer apparatus up, in the area of the roof, expands the other use significantly.

The delivery system and transport unit according to the invention are applied, for example, in the manner described below, wherein a cargo container is especially used.

In the following, the invention will be described in more detail with reference to the appended drawings, in which
- Figs. 1a to 1b: show a transport unit in a side view,
- Figs. 2a to 2b: show a transfer platform in a side and top view,
- Figs. 3a to 3b: show a locking shelf in a front and side view,
- Figs. 4a to 4c: show a transfer car in a side, top and end view,
- Figs. 5a to 5b: show a track in a side and top view,
- Figs. 6a to 6b: show a transport unit, wherein the apparatuses are packed, in a top and side view,
- Figs. 7a to 7b: show another embodiment of the transport unit in a side view,
- Figs. 8a to 8c: show another embodiment of a lift and transfer apparatus in an end view,
- Figs. 9a to 9b: show an alternative of locking in a side and top view,
- Figs. 10a to 10d: show an alternative of the suspension of a transfer platform in a top and side view,
- Figs. 11a to 11 b: show loading of cargo to a transport unit according to an embodiment, in a side view, and
- Fig. 12: shows the operation of the transport system in a principle view.

In the figures, the operationally or structurally corresponding parts are marked with the same reference numbers.

With that embodiment of the invention, which utilizes standard cargo containers, special benefits are gained, because it is possible to utilize the already existing international cargo-container-based transport system.

A globally used cargo container is utilized in the embodiment in question, the type of which container is a 40' High Cube (HC) sea container, whose outer dimensions (length x width x height) are around 12,192 x 2,438 x 2,895 mm (40' x 8' x 9'6"). The height of a corresponding 40' standard sea container (Standard Container) is 2,591 mm (8'6"). In addition, a globally used 45' High-Cube sea container is known, whose length is 13,716 mm (45' x 8' x 9'6"). In the USA are also in use a 48' cargo container (48' x 8'6" 'x 9'6½") and a 53' cargo container, whose outer dimensions (length x width x height) are around 16,150 x 2,591 x 2,908 mm (53' x 8'6" x 9'6½").

In addition, a so-called 40' Eurobox is in use, whose outer dimensions (length x width x height) are around 12,192 x 2,500 x 2,591 mm (40' x 8'2" x 8'6") and a corresponding HC-type, whose height is 2,896 mm (40' x 8'2" x 9'6"). The capacity of HC-type cargo containers is approx. 18% larger than with smaller standard containers, which are also called DC-containers (Dry Cargo). In the invention, the inner capacity of the HC-cargo container, which is approx. 300 mm (1') higher, is used, in which inner capacity is placed a lift and transfer apparatus, when it is not in use. Especially the container is a 20' High-Cube (6,058 x 2,438 x 2,895 mm, 20' x 8' x 9'6"), a 40' High-Cube and a 45' High-Cube sea container types.

The handling of HC-containers has been based on the same technique and apparatuses as that of the DC-containers. In the HC-container of car transport according to the invention it is possible to release a space corresponding to the DC-container, which is about 12,020 x 2,342 x 2,388 mm in a 40' cargo container, and which can be utilized in the transport of return cargo.

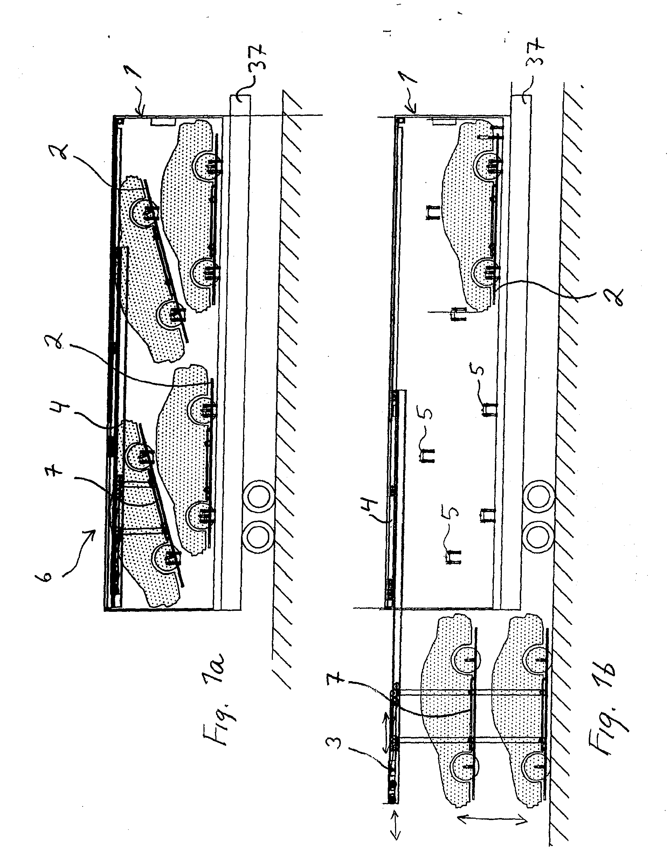

Figs. 1 a and 1 b show a first embodiment of the invention, which utilizes a container 1, which is a 40' HC-container, a transfer platform 2 and locking shelves 5 as well as a lift and transfer apparatus 6, which in this example comprises a transfer car 3, a telescopic track 4 and a gripper. The container can fit four cars 8.

Each car 8 is placed on its own transfer platform 2, which can also be called a cassette or a palette. The transfer platforms 2 are specified and constructed in such a manner that they are compatible with the lift and transfer apparatus 6, especially with its gripper 7. The car 8 is attached in its place on the transfer platform 2 in a desired manner, for example, from its tyres, so that the car 8 cannot move forward or backward, or sideways during the transport of the container 1 and during the operation of the lift and transfer apparatus 6. For example a hood, which is attached to transfer platform by means of a fastening rope, is placed around the car tyre. The lift and transfer apparatus 6 of the container 1 is gripped onto the transfer platform 2, brings it out of the container 1 and lowers it to the ground so that the car 8 can be driven off from the transfer platform 2 or onto the transfer platform 2 for attaching. In this example, a one-piece transfer platform 2 is applied, but the details of the transfer platform 2 vary.

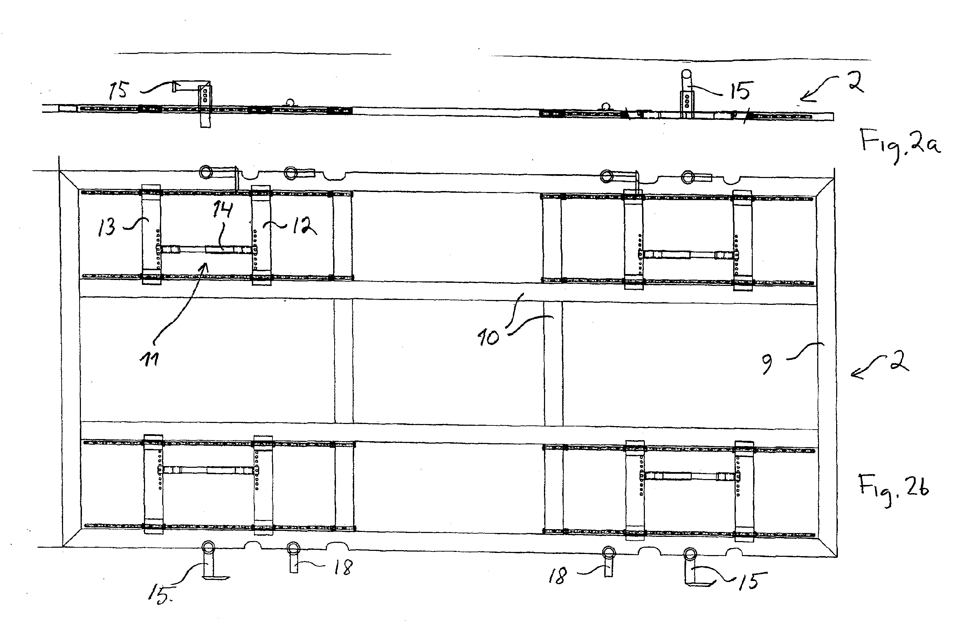

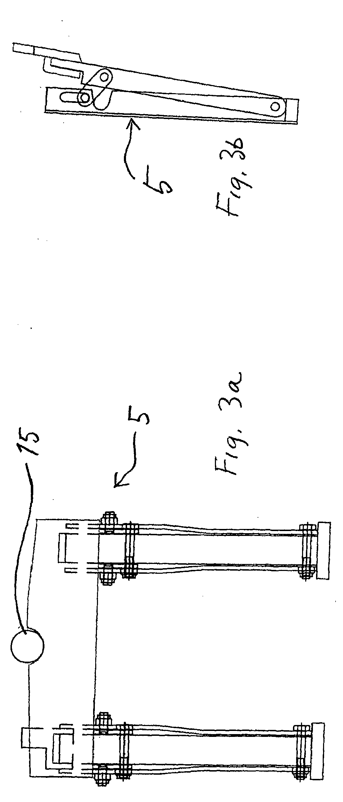

An example of a transfer platform 2 is shown in figures 2a and 2b. The transfer platform 2 comprises a rectangular frame 9 and a framework 10, and its width is approximately 2,000 to 2,050 mm. There is a fastening pocket 11 for each tyre of the car 8, which pocket comprises at least two cross beams 12 and 13, whose mutual distance and position in relation to the frame 9 can be changed. The distance is set and locked, for example by means of a headless screw 14. For lifting, there are two L-shaped supports 15 on both sides of the transfer platform 2, which supports can be turned to be parallel to the longitudinal direction of the transfer platform, or towards the inner wall of the container 1. The horizontal part of the support 15 settles against a locking shelf 5, which is attached to the inner wall of the container 1 either on a standard height or on an adjustable height, which depends on the cars being loaded. If necessary, the locking shelf 5 prevents the movement of the transfer platform 2 in the longitudinal direction of the container 1. An example of a locking shelf 5 is shown in figures 3a and 3b. The locking shelf 5 is a type of a support, which, if necessary, can be folded as close to the inner wall of the container 1 as possible, for example in a cavity of a wavelike wall. In addition, the transfer platform 2 comprises two other turnable, L-shaped supports 18, to which the gripper 7 of the lift apparatus is attached for lifting cars 8.

When using the transfer platform 2 for transporting car bodies or other parts and modules, the necessary jigs, holders or clamps can be attached to the transfer platform 2, to which the items being transported are attached. In an embodiment of the invention the transfer platform 2 is equipped with detachable holders, or turnable supports integrated to the transfer platform, to which the car is attached from its hubs without rims and tyres. By means of a transfer platform 2 equipped with holders or supports, the car can be moved in an assembly plant and elevated storages or loading area even without tyres. Special tyres and special rims are assembled in place by the retail dealer.

In an embodiment a locking shelf 5, or some other member supporting the transfer platform 2, can be attached on varying levels in a vertical locking rail, which is suspended on the wall of the container and which can, in turn be moved in the longitudinal direction of the container, or several of which are placed on the wall of the container 1. The locking rails are placed preferably in the cavities of the corrugated form of the wall of the container 1.

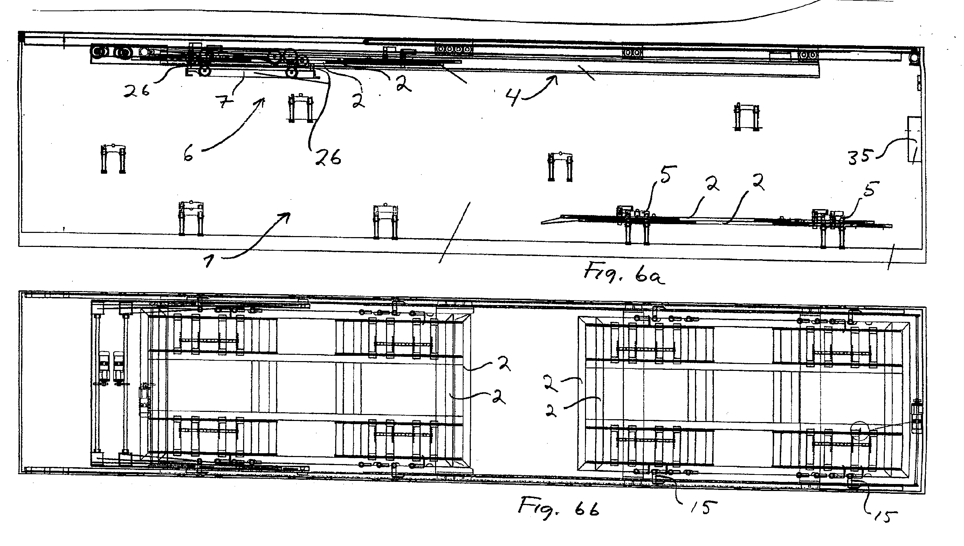

The lift and transfer apparatus 6 moves the transfer platform 2 with its car 8 into the container 1, where the transfer platform 2 is locked on a desired level and in a desired position. Depending on the size of the car 8 and the container 1, 1 to 6 transfer platforms 2 per container 1 are needed. The car 8 and the transfer platform 2 can also be attached in an inclined position in order to utilize the interior of the container 1 effectively. After the locking the lift and transfer apparatus 6 releases the transfer platform 2 and leaves to retrieve a new transfer platform 2 with its car 8. At the end of loading or unloading the track 4 and the transfer car 3 recede into the container 1 according to Fig. 6a.

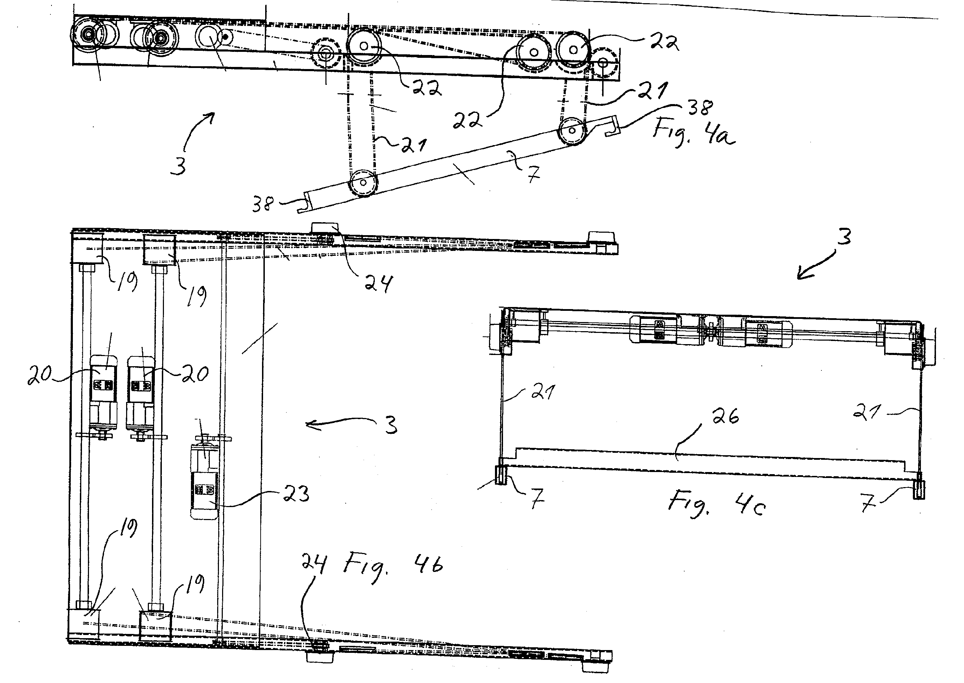

An embodiment of a frame-like transfer car 3 is shown in figures 4a, 4b and 4c, where is also shown a gripper 7, which is lifted and lowered, for example by means of wire drums 19 and their motor drives 20. There are two grippers 7, each located on their own side of the car 8 and the transfer platform 2, and each gripper 7 is used by means of two wires 21, which are lead through idler wheels 22, which enables inclining the transfer platform 2 forward or backward as much as desired. The ends of the gripper 7 grip, for example, with hook or angle members to the supports 18 and prevent the transfer platform 2 from sliding downwards even though the position is inclined towards the back door of the container 1. The gripping members 38 of the gripper are constructed preferably in such a manner that attaching them to the supports 15 does not require manual handling, but the attaching can be performed by means of the movements of the gripper 7. Therefore, in the lower end of the gripper 7 comprises, for example, a hook-like support 38, inside and on top of which the support 15 settles, and which prevents the support 15 from sliding downwards, and in the upper end there is an angle support 38, on top of which the support 15 settles. The placement of idler wheels 22 and wire 21 may differ from what is presented above. In this example, in the transfer car 3 is also placed an engine drive 23, which drives the wheels 24, which transfer the transfer car 3 when it is place on the support of the track 4. The transfer car 3 includes the necessary sensors, by means of which it is possible to monitor the position of the transfer platform 2 and the elevation position of the gripper 7.

For special purposes it is possible to place two or more lifter bars 26 to connect the grippers 7 according to Fig. 4c. The lifter bars 26 are at the same time placed under one, or preferably two on top of each other packed transfer platforms 2. In this manner, two transfer platforms 2 can be lifted as high as possible for attachment to the upper part of the container 1 and for storage when the purpose is to free the inner space of the container for other things than transporting cars 8. The devices of the transfer car 3 and the gripper 7 form the necessary lifting and lowering members for lifting the transfer platform 2.

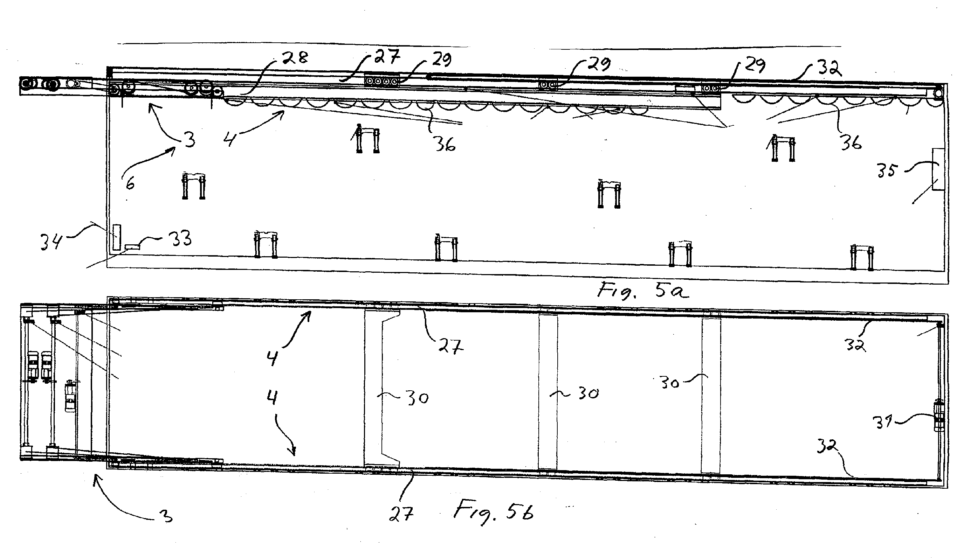

An embodiment of the track 4 and the transfer platform 3 (without grippers 7) is shown in more detail in Figs. 5a and 5b. The track 4 comprises a telescopically operating, two-piece bar, which in turn comprises two immobile bars 27 attached to the sides of the inner roof of the container 1, which at the same time operate as a guide for two moving bars 28, to which are in addition attached the necessary rolls or wheels 29 for transfers. The placement of the wheels 29 may differ from what is presented above. The moving bars 28 are attached to each other with several transverse supporting beams 30, for example at the wheels 29, in which case a partly rack-like frame structure is formed. The transfer car 3 is suspended from the bars 27, 28 and the moving bars 28 transfer along the immobile bars 27 by means of motor drive 31 and, for example, chain drive 32. The moving bar 28 can now be transferred along an immobile bar 27 in such a manner that the moving bar 28 extends partly out of the doorway of the container 1 and at the same time the transfer car 3 can get at least partly out of the container 1 along the moving bar 28. The motor drive of the transfer car 3 and the gripper 7 are located in such a manner that the motor drives come out first.

The track 4 is lengthened and shortened by means of a motor drive 31 place on the inner roof at the rear part of the container 1 and, for example, chain drive 32. The container 1 comprises a delivery case 33 for the delivery of current, for example for a voltage 3 x 380 V. For the part of the delivery of current it is possible to apply one or more voltage levels. For controlling the lift and transfer apparatus 6, a driving panel 34 is also placed in the container 1 and a control center 35 of the lift and transfer apparatus 6 is placed in the back wall inside the container 1. The electric power and control data are distributed to motor drives, for example, by means of cables 36 or cable reels. As suitable, one or more motor drives can be replaced with, for example, a hydraulic motor, in which case the container 1 comprises either connections for the input of a pressurized medium or preferably the container 1 comprises a machine unit for producing a pressurized medium and for distributing it to motors by means of, for example, hose pipes. The machine unit comprises, e.g., a medium tank and a pump.

According to Figs. 1 a, 1 b the cars 8 are lifted inside the container 1 one at a time in the desired position and they are locked in the locking shelves 5 via transfer platforms 2. The track 4 of the lift and transfer apparatus 6 and the transfer car 4 reciprocate horizontally and the grippers 7 reciprocate vertically. For transport, padding or other protective and supporting structures are placed between the cars 8 and the inner walls of the container 1, which prevents damages caused by rocking. The grippers can be left locked to the transfer platform 2 of the car 8 that was lifted in the container 1 last, or they are lifted up to the roof of the container 1 and are locked in place.

According to what is shown in Figs. 1 a, 1 b, the container 1 is placed on top of a container transport trailer 37 that is pulled by, and is attached behind, for example, a drawing vehicle. The height of the container transport trailer 37 is approximately 1,300 to 1,500 mm, which is a typical situation when cars 8 are unloaded from the container by the retail dealer. The vertical movement of the gripper 7 is constructed so large that in this situation it extends all the way to the ground, and cars 8 can be driven off the transfer platform 2 on the ground. The reach of the track 4 and the movement of the transfer car 3 out of the container 1 is also specified so large that even a long car 8 can be lowered to the ground. In the example presented here the reach of the track 4 and the transfer car 3 is almost 5 meters. For lifting especially heavy cars, it is possible, if necessary, to attach at the end of the track 4, i.e. at the end of the moving bars 28 a support reaching the ground as well, which support is, for example, a vertical bar with an adjustable length, or a framework or a triangular support, which supports the track 4 and prevents it from bending.

If two transfer platforms 2 cannot be placed on top of each other on the ground, the container transport trailer 37 must be moved so that the transfer platforms 2 settle on the ground one after the other. The container transport trailer 37 must also be moved when two transfer platforms 2 are desired to be loaded to the container 1, either with or without cars. Two overlapping transfer platforms 2 are returned to the container 1, either on the floor or preferably on the support of locking shelves 5. In an embodiment of the invention the transfer platforms are compatible in such a manner that two or more transfer platforms 2 can be placed on top of each other and a car 8 can be driven out over them, in which case the transfer of the container transport trailer 37 in connection with loading or unloading is not necessary and the transfer platforms 2 are already on top of each other for lifting them in.

Figs. 6a an 6b in turn show an embodiment, where the grippers 7 and the transfer platforms 2 can be stored inside the container 1 under the roof, preferably in such a space, which has a height corresponding to the difference between the internal height of a so-called standard container model (DC, Dry Cargo) and a High Cube container model (HC) (40' DC: approx. 2,388 mm) (40' HC: approx. 2,694 mm, 45' HC: approx. 2,696 mm). Thus, it is possible to leave a space for cargo corresponding to a standard container mode (DC) in the lower part of the container 1, but for its outer dimensions the container corresponds to a HC container model. The handling of containers 1 corresponding to the HC container model can be carried out with systems that are in use in the same manner as with a normal DC container model and in addition the global logistic operators use systems, which can be used to monitor the transport of cargo containers. The container 1 can be used for transporting normal cargo, in which case cars are transported from one continent to another according to Fig. 1 a and the return cargo is loaded in the container according to Fig. 6a. By means of the existing systems it is possible to maintain information about the location of the container 1 and return it after the normal cargo is unloaded to, for example, the car assembly plant or some other location, where cars 8 are transferred to the container 1.

The transfer platforms 2 are lifted up by means of the gripper 7 in such a manner that the grippers 7 are attached to each other by means of lifter bars 26, which in addition are placed under the transfer platforms 2. Two transfer platforms 2 are on top of each other, supported by, for example, locking shelves 5. The supports 15 of the lower transfer platform 2 are turned in such a manner that they settle to the locking shelves 15 and when they are lifted to the roof they lock either into the roof of the container 1 or to lockings placed on the track 4. Two transfer platforms 2 are supported alternatively only by grippers 7 as well, which are lifted up and locked in place.

In addition, the container 1 comprises the necessary control automation in the control center 35 for controlling the lift and transfer apparatus 6 and, for example, for controlling motor drives. The operation of the lift and transfer apparatus 6 can also be implemented solely with manual control, or in addition with mechanical control for a fault situation or such a situation when there is no electricity available for use. If necessary, the movements with which the cars 8 are loaded or unloaded are programmed into the control automation. The necessary sensor system can be attached to the lift and transfer apparatus 4, which system detects whether there is a danger of collision during the movement. One or more electricity delivery systems that are compatible with the local standard are arranged in the container, in which case it can be either 440 V, 230 V, 110 V or 24 V systems. The electricity production of a drawing vehicle can also be utilized. For the part of the electric or control system, it is also possible to apply devices known as such, but the control is constructed and programmed with the use of the above lift and transfer apparatus 4 in mind.

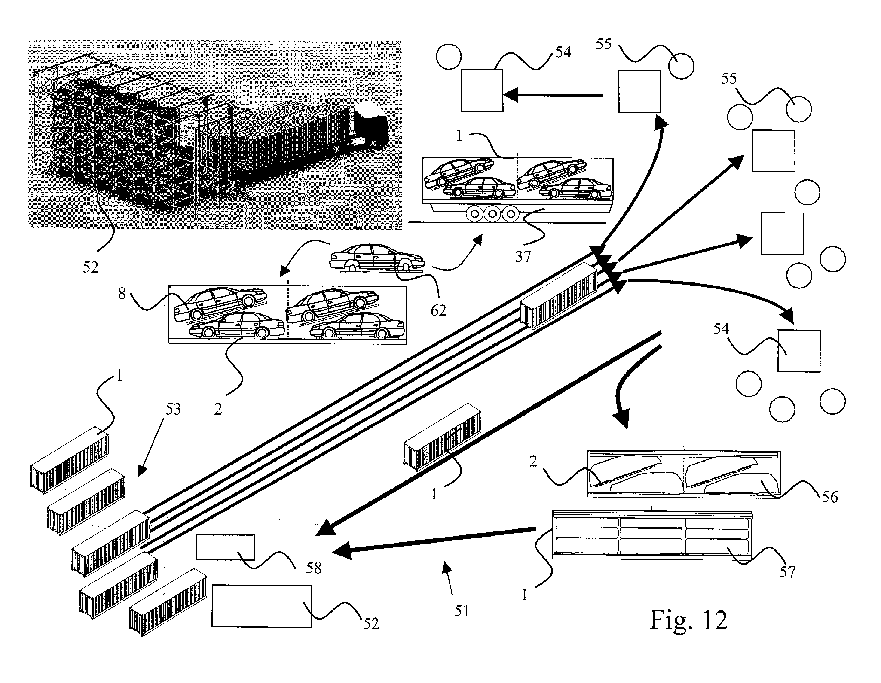

Let us next examine the transport system 51 according to Fig. 12 and the method where the above-mentioned container and its different apparatuses are applied. A car assembly plant 52 is used as an example. The containers 1 placed on a container loading station 53 are meant to be filled even with retail-dealer-specific delivery lots. The formation and completion of delivery lots is monitored by means of a data system. The assembly plant 52 has several loading places for containers 1 and a so-called open time of containers, which is approximately ½ to 2 days long, is used in production control, during which time the retail-dealer-specific containers 1 are filled. The purpose is to have as many containers 1 as possible filled at one time, but a part of the containers are filled in phases within the open time. It is possible to use the container's own lift and transfer apparatus for the loading. The purpose is, however, to form a delivery lot, which goes all the way to the receiver without unloadings and car re-loadings taking place at intermediate stations, or by minimizing them. In the re-loading, only a part of the cars are removed from the container 1 and possibly in their place is loaded the same number of cars or less. By means of the lift and transfer apparatus included in the container 1 the delivery lot is placed automatically in the container 1 and locked in place for transport. After the delivery lot is finished, the containers 1 can be handled with conventional container transfer devices, which are equipped, for example, with container grippers. In different phases of the transport system 51 the containers 1 can be handled by means of methods that are in use for handling standard size cargo containers, relating to railway transport, land transport as well as sea transport.

From the loading station 53 the containers 1 are lifted, for example, to a railway carriage of a container transport train, which is directed, for example, to a central railway station and after that further to a container port. Loading the train is fast and railway carriages are suitable for general use, and therefore there is no need to keep the railway cars in the loading station 53 or in the area of the assembly plant 52 for long.

The containers stay in the container ports only 1 to 2 days and their loading processes are highly mechanized or automated, and they operate 24 hours a day. Known container ships are used in sea transport, in which ship the cargo is mainly composed of both car transport containers 1 and containers with regular cargo. The need for special transport ships for transporting cars is thus decreased. Container ships depart at short intervals, and therefore even small lots of 50 to 500 cars can be sent forward. Containers 1 comprising cars as well as a lift and transfer apparatus, whose dimensions and handling correspond to standard containers, are one type of cargo among other types. The containers in question are mostly standard containers, which are equipped with a lift and transfer apparatus. Because of their relative lightness, which is around 10 tons compared to the 30-ton weight of a normal cargo container, the containers are centered in the container ship possibly as deck load, which ensures a fast and centralized unloading in the port of arrival, even directly to a railway carriage.

The containers 1 transporting the cars are placed before the loading or after unloading in the terminal points, such as a container port, into a container storage, at one area of which the containers 1 transporting cars can be centered. The trains used in transporting containers 1 can transport other cargo containers in return traffic, and therefore the utilization rate of railway cars increases. For example, in the USA the containers can be loaded to railway carriages, where two containers can be transported on top of each other. In a terminal point of container traffic, the containers 1 transporting cars are transferred to be transported by trucks, in which case the containers are loaded to a transport trailer 37 for transporting standard containers. One or more containers 1, each including a delivery lot of 3 to 4 cars, are transported directly to a retail dealer 54, where the cars are transferred by means of the lift and transfer apparatus in the container out of the container 1 to be delivered to the customer 55. The receivers do not need their own lift and transfer apparatus, because it is already included in the container 1. After this, the container 1 and its lift and transfer apparatus are returned to a state that enables the loading of normal cargo 57.

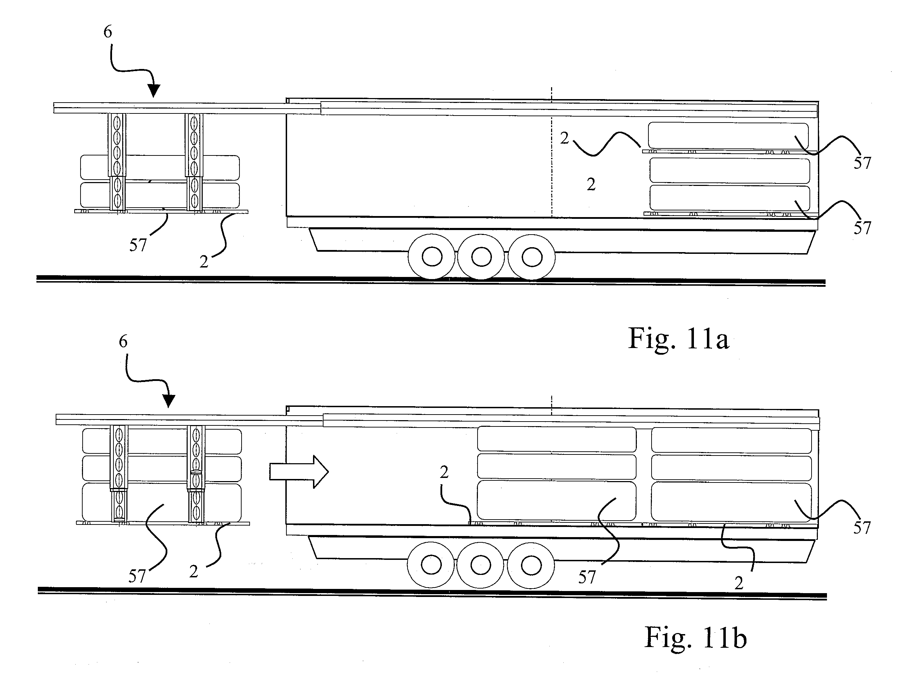

By means of data systems the container 1 is monitored and it is aimed to be directed to the transport of normal cargo 57 or such cargo according to Figs. 11 a and 11 b, which brings it further, for example via sea transport, as close to the car assembly plant 52 as possible, and therefore the incidents of transporting the container empty are minimized. The most optimal situation is reached when the containers 1 are directed to transporting such cargo that comprises, for example, car bodies 56, modules, components and other parts needed in car assembly from subcontractors or other units of the car manufacturer. According to an embodiment of the invention, for example, the body 56 of a car is transferred on the transfer platform 2 in question to the assembly plant 52, where the transfer platform 2 is integrated for the use of the production process, for example for storing car bodies 56 in an automated storage 58 or in some other storage, and for transfer from there to the production process, or for the transfer of a unfinished car. By means of the same transfer platform the finished car is also transferred from the production line further by means of conveyor tracks directly to a loading station 53 or to a buffering automated elevated storage 58. The transfer platform together with the car can also be moved to the loading station 1 within reach from the lift and transfer apparatus of the container 1 to be lifted to the container 1. The lift and transfer apparatus of the container 1, and if necessary, also the transport platforms and attachment solutions, for example, locking shelves, are used in handling cars as well as car bodies 56 and other cargo. The elevated storage comprises, for example, a multilevel shelving, to which the cars with transfer platforms are transferred, for example, by means of a stacker crane and its lifting carriage, by using, for example forks, which support the transfer platform. By means of the same stacker crane they are also moved to the conveyor track or within reach from the lift and transfer apparatus of the container 1.

The use of a transfer platform 2 for normal cargo 57, as well as the use of lift and transfer apparatus 6 makes cargo handling easier and the locking possibilities are diversified, as is shown in Figs. 11 a and 11 b. The transport of car bodies 56 and tyreless cars 62 should still be especially mentioned. The present global logistics for transporting containers enables directing the containers 1 that are able to transport cars to such transport routes, where waiting is minimized in the terminal points of container traffic. A standard-size container enables the use of several different container and RORO shipping companies, and therefore a suitable one can be selected on the basis of, for example, the transport route, timetables or competition.

Containers transporting cars are also transported in RORO ships (Roll on Roll off) by placing two containers on top of each other on top of the RORO cassette. It is also possible to transport 300 to 400 containers transporting cars on the two heavy load decks of PCTC ships. The containers are placed on top of the so-called RORO cassettes.

Those general principles that have been applied above in connection with the lift and transfer apparatus 4 can also be applied in those lift and transfer apparatuses where the technical details differ from those presented above. Let us next examine other more detailed embodiments.

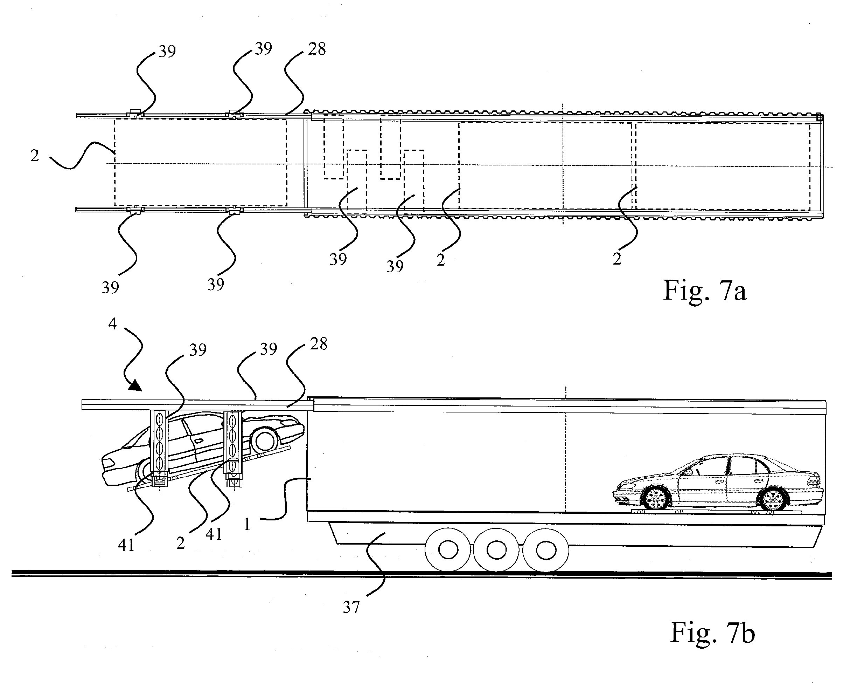

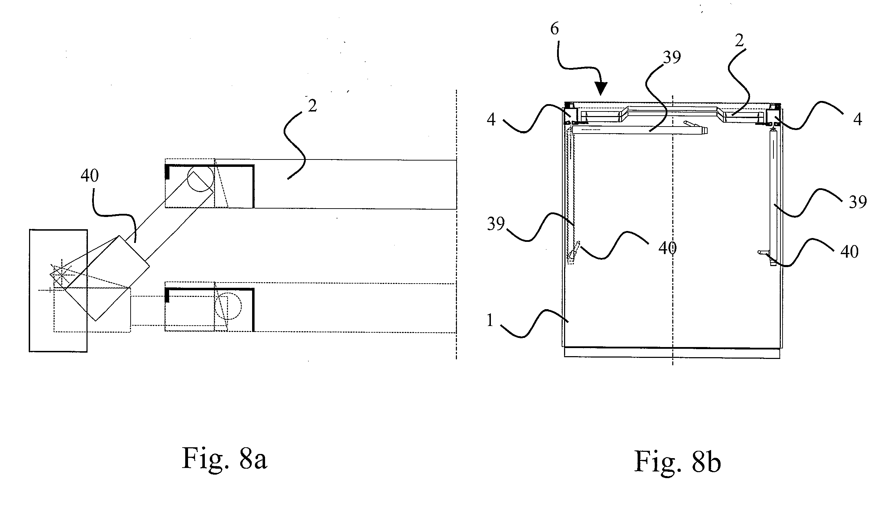

According to Figs. 7a and 7b, the transfer car 3 of Fig. 4b and the grippers 7 lifted and lowered by means of a chain are replaced with four lift arms 39, which are vertical and operate vertically preferably telescopically in such a manner that they are able to lower the transfer platform 2 down, on top of some base or, if necessary, all the way to the ground when the container 1 is on top of a transport trailer 37 of containers. The total length of the lift arm 39 and at the same time the height position of the gripper 40 (Figs. 8a and 8b) placed at the lower end of the lift arm 37 are controlled, for example, by means of a chain drive. In an embodiment of the invention the gripper 40 can, by means of said chain drive, be moved in relation to the lift arm 39 and therefore the lifting height of the gripper 40 becomes greater than the movement of the lower end of the lift arm 39. The lift arm 39, which is, for example, a bar or a profile construction, operates as a track, along which the gripper 40 moves. The telescopically operating lift arm 39 is two-piece or multi-piece. Each lift arm 39 is in this embodiment equipped with its own motor drive, which is located inside the track 4, for example inside the moving bar 28 for transfers. The distance between two lift arms 39 on the same side can thus be varied, if necessary.

The lift arms 39 are applied in transferring the transfer platform 2 in such a manner that is shown above in connection with Figs. 1 a and 1 b. The transfer platform 2 can be transported with lift arms 39 to be supported by the above-presented locking shelves 5 (Figs. 1 a and 1 b). It is also possible to place an actuator in the lift arm, which actuator operates as a gripper 40 (Fig. 8a and 8b), which can be controlled and which performs the gripping to the transfer platform 2. Then it is possible to apply, for example, turning or moving pins or links, which grip to the counter members on the transfer platform 2 or to supports 18 (Fig. 2a). According to Fig. 8a, the gripper 40 comprises a support that turns approx. 45 degrees upward from the horizontal position, by means of which support two overlapping transfer platforms 2 are lifted yet another extra 100 to 150 mm. In this embodiment, there is a support roll at the end of the support. The transfer platforms 2 are locked, for example, to the track 4, when the lift and transfer apparatus 6 is packed to the upper part of the container 1.

Two lift arms 39 settled on opposite sides of the container 39 are synchronized together and to another lift arm pair for control. Thus, an operation corresponding to the transfer car 3 of Figs. 4b is implemented. According to an embodiment of the invention, two lift arms 39 settled on opposite sides of the container 1 are attached mechanically to each other with a frame structure, which is located as close to the roof of the container 1 as possible, in which case a sort of a transfer car is formed, and therefore the support arms 39 move together in pairs.

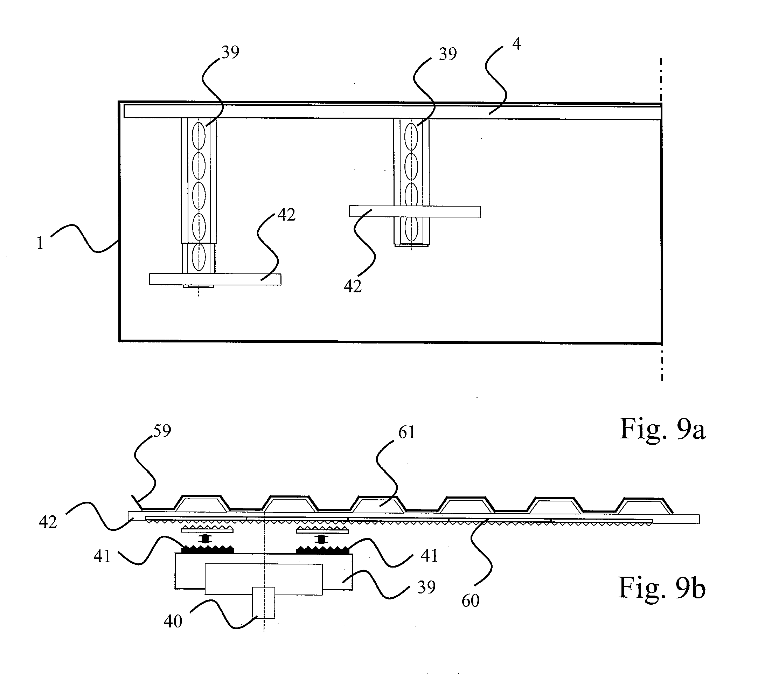

According to an embodiment of the invention the container 1 is equipped with eight lift arms 39, and according to Fig. 9 (and Figs. 7a and 7b) each lift arm 39 is equipped with a locking 41, by means of which the lift arm 39 can be locked in its place to the inner wall of the container 1 or alternatively to the floor of the container 1. There is, for example, a locking track in the floor, which utilizes a locking form or other locking. The locking 41 is in one or more parts of the lift arm 39 at a suitable height. There are thus four lift arms 39 per each car 8 stored in the upper part of the container 1. Lifting the cars 8 is arranged in such a manner that for lifting two cars 8, all eight support arms 39 can be moved out of the container 1 along the track 4. The use of eight lift arms 39 enables varying positions of the uplifted car 8 and its free location in the longitudinal direction of the container 1, because, for example, fixed locking shelves 5 are not used. The car 8 can, if necessary, be inclined both forward and backward. The support bars 39 operate preferably in pairs, and pairs can be taken out of the container 1 as close to each other as possible. According to another embodiment, only four lift arms 39 are moved out of the container 1 and they lift the car 8 onto the floor of the container 1 or to a temporary suspension, such as a locking shelf 5. The other four support arms 39 then lift the transport platform 2 with its car 8 to the rear part of the container 1, either to the lower part or the upper part. The lift arms 39 remain in the container 1 during transport attached to the transfer platform 2 of that car 8 that is lifted to the upper part of the container. Either the lift arms 39 or the transfer platform 2, or both, are locked in their place. In that embodiment, which comprises only four support arms 39, versatile positions and locking of the support arms 39 relate only to the car 8 that was lifted in last.

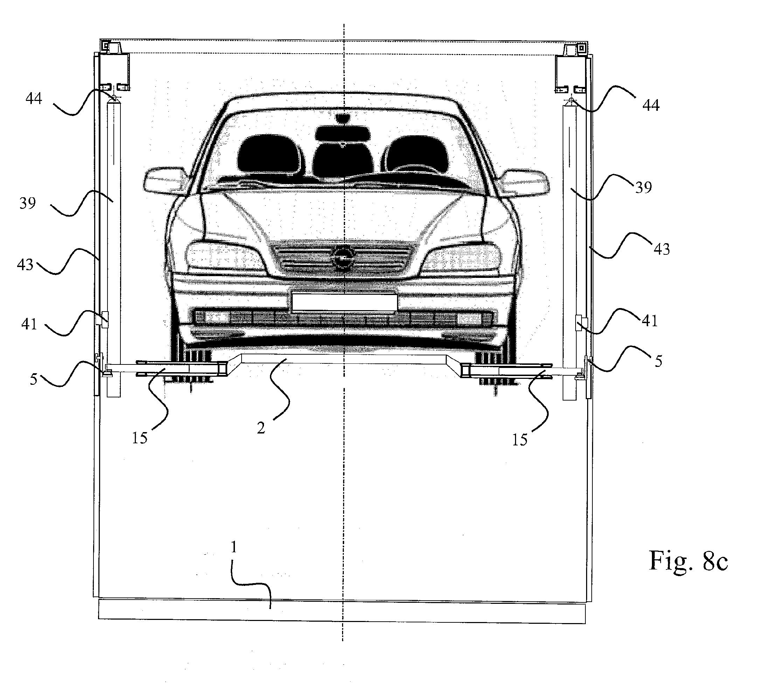

According to Figs. 7a and 7b, as well as Fig. 8c, one or more locking members 41 are placed in the lift arm 39, for example in its lower end, which member guided by an actuator presses against the wall 59 of the container 1, or alternatively against the floor, or against some other profile or member 42 attached to it, according to Figs. 9a and 9b. Preferably it is a locking member, whose form corresponds to the form of the ridges of the wall in order to prevent the lift arms 39 from rocking in the longitudinal direction of the container 1. Thanks to the lockable lift arms 39, the locking is simplified and there is no need to attach the above-presented locking shelves 5 or locking tracks to the inner walls of the container 1. In its simplest form, the locking member 41 has a surface with a certain profile, preferably a saw-like from, which projects and locks to the projected position against a counter-member 42 attached to a wall, which has the corresponding form 60. The counter-member 42 is, for example, a track, that extends to that area where the transfer platform 2 typically settles. Transfer platforms 2 placed on the floor of the container 1 can, for example, in the manner already presented above, be locked to the walls 59 of the container 1, or to the floor. Thus, the transfer platform 2 comprises a form corresponding to the locking member 41, and there is a form corresponding to the counter-member 42 on the floor, which is attached to the floor. The counter-member 42 is, in turn, locked in the longitudinal direction by utilizing the corrugations of the wall 59, in which case there is a form 61 corresponding to the corrugation of the wall 59 on the opposite side of the counter-member 42. The recurring form 61 of the counter-member 42 is denser than the density of the pattern recurring in the corrugation of the wall 59, and therefore the transfer platform 2 has significantly more position alternatives than in the case that the locking member 41 should always be at the corrugation of the wall 59. The counter-member 42 is either attached to the wall 59 or it is suspended on the wall by means of vertical support bars 43 according to Fig. 8c. The use of compatible forms is possible also in the transfer platform 2 and its lockings.

According to an embodiment, the vertical support bar 43 comprises locking apertures at regular spacing of, for example, 25 mm, to which the locking member 41 of the lift arm 39, for example a pin-like support, projects guided by the actuator. Alternatively it is possible to connect a locking shelf 5 or some other locking device to the locking apertures, which device, in turn, supports the transfer platform 2 or holds the locking member 41.

According to the invention the lift arms 39 can according to Figs 7a and 8b be lifted and turned parallel to the roof of the container 1, as close to the inner roof as possible. The transfer platforms 2 can be stored to the roof in pairs and they can be suspended by locking, for example, supported by the tracks 4 as has already been described above. The lift arms 39 rotate around a hinge 44 (Fig. 8c) towards the roof and the rotation axis of the hinge 44 is parallel to the longitudinal direction of the container 1. The hinge 44 is placed as high as possible and close to the track 4, and therefore the lift arms 39 that are turned up, together with the transfer platforms 2, only take a space that corresponds to the height difference between an HC container and a standard container (approximately 1').

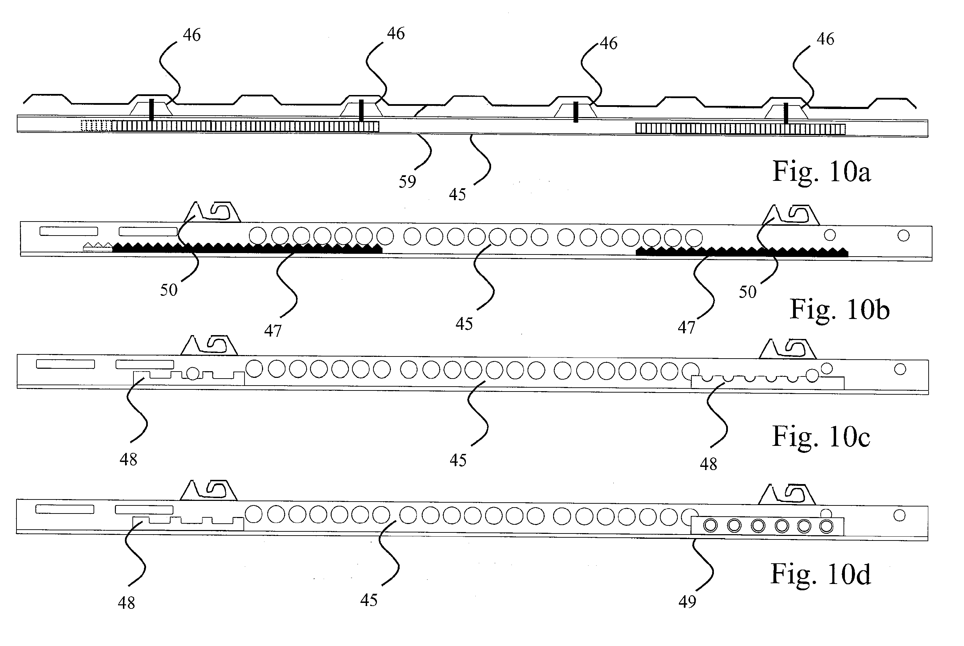

In an embodiment of the invention the transfer platforms 2 of either one or both uplifted cars 8 rest supported by two support tracks 45, which is presented in different embodiments in Figs. 10a, 10b, 10c and 10d. The support track 45 is mainly horizontal, but it can be set in an inclined position as desired, in order to have the car inclined as well. The support track 45 is settled supported by two or more support bars 46, to which the support track 45 is locked, for example by pin mounting. Alternatively, there is, for example, a screw drive or a chain drive inside the support bar 46, which guided by motor drive sets the support track in a desired position. Because of varying positions, the support track 45 attaches to one or more support bars 46 with a mounting, for example via a link or a pin, which allows the longitudinal movement of the support track 45 in relation to the support bar 46. At least one mounting between the support bar 46 and the support track 45 prevents the movement of the support track in the longitudinal direction of the container.

The support bars 46 settle to the corrugation of the wall 59 and their task is to receive the longitudinal forces of the container 1. Preferably the form of the support bars 46 corresponds to the form of the wall 59 in order for the form locking to be possible. The loaded support track 45 also distributes the loading caused by the car weight to the wall 59. There is, for example, a locking, saw-like form 47 on the upper surface of the support track 45, which settles against a corresponding form, which is on the lower surface of the transfer platform 2, if the transfer platform 2 extends over the support track 45, or in the support 15. Thus, the transfer platform 2 is prevented from sliding along the support track 45. Alternatively, the supports 15 of the transfer platform 2 settle in the links 48 of the support track 45 and/or to the holes or cavities 49. The support tracks 45 are attached to the roof, for example, by means of supports 50, when the lift and transfer apparatus 4 is packed in the upper part of the container. The support track 45 can be comprised of two parallel parts, which are each attached supported by two support bars 46.

The invention is not limited solely to the examples presented above, but it may vary within the scope of the appended claims. The combination of different attachment alternatives is possible and each car can be attached to their place in a different manner.

## Claims

1. A transport unit for transporting cargo, which cargo is a car (8), a car body (56) or other cargo (57), **characterized in that** it comprises a lift and transfer apparatus (6), which is placed inside said transport unit (1), arranged during the loading of the transport unit (1) to extend outside the transport unit (1), to grip to a transfer platform (2), on top of which the cargo is placed, to lift said transfer platform (2) that is outside the transport unit (1) inside the transport unit (1), and to transfer the transfer platform (2) to its place in the transport unit (1), as well as during the unloading of the transport unit (1) to transfer the transfer platform (2) outside the transport unit (1).

2. The transport unit according to claim 1, **characterized in that** the lift and transfer apparatus (6) can be packed inside the transport unit (1) to the upper part of the transport unit (1).

3. The transport unit according to claim 1, **characterized in that** the transport unit (1) is a cargo container and the lift and transfer apparatus (6) can be packed inside the cargo container to the upper part of the cargo container to a space that corresponds to the height difference between a standard container and a so-called High Cube container.

4. The transfer unit according to any of the claims 1 to 3, **characterized in that** the transport unit (1) is a cargo container, which is a 20' HC sea container, a 40' HC sea container, a 45' HC sea container, a 48' USA container, or a 53' USA container.

5. The transport unit according to any of the claims 1 to 4, **characterized in that** the car (8), the car body (56) or the other cargo (57) is attached on the transfer platform (2), wherein the lift and transfer apparatus (6) comprises a gripper (7, 40), which is arranged to grip to the transfer platform (2) for transfers and lifting.

6. The transport unit according to claim 5, **characterized in that** the transport unit (1) comprises locking means (5, 41, 42, 45, 46) whose task is to lock the transfer platform (2) at a desired height and in a desired position.

7. The transport unit according to claim 5 or 6, **characterized in that** 1 to 6 transfer platforms (2) can be packed inside the transport unit (1) to the upper part of the transport unit (1).

8. The transport unit according to any of the claims 1 to 7, **characterized in that** the lift and transfer apparatus (6) comprises a horizontal track (4) operating telescopically and placed in the upper part of the transport unit (1).

9. The transport unit according to claim 8, **characterized in that** lifting and lowering members (3, 7, 21, 39, 40) are suspended supported by the track (4), which members are arranged to lift and lower the cargo and to move along the track (4).

10. The transport unit according to claim 9, **characterized in that** the lifting and lowering members comprise a vertical lift arm (39) and a gripper (40), which can be lifted and lowered by means of said lift arm (39).

11. The transport unit according to claim 10, **characterized in that** the lift arm (39) comprises a locking member (41), whose task is to lock the lift arm (39) in its place against the wall of the transport unit (1).

12. The transport unit according to claim 10, **characterized in that** the transport unit (1) comprises either all together four lift arms (39) or all together eight lift arms (39).

13. The transport unit according to claim 9, **characterized in that** the lifting and lowering members (39, 40) comprise a locking member (41), whose task is to lock the lifting and lowering members (39, 40) in their placed by means of a locking form, and which transport unit (1) comprises a counter-member (42), which also comprises a corresponding locking form (60).

14. The transport unit according to claim 13, **characterized in that** the counter-member (42) can be locked in its place by means of another locking form (60), which corresponds to the form of the wall of the transport unit (1), in which case the other locking form (60) is denser than the locking form of the locking member (41) in question.

15. The transport unit according to claim 6, **characterized in that** the transport unit (1) comprises a support track (45) whose position can be adjusted, which supports the transfer platform (2), and whose task is to lock the transfer platform (2) at a desired height and in a desired position.

16. A method for transporting cars in a cargo container from an assembly plant to a car retail dealer, in which method:
- a car (8, 62), which is attached on its own transfer platform (2), is handled, and
- one of more cars (8, 62) are loaded to the cargo container (1),
**characterized in that** the cargo container (1) comprises a lift and transfer apparatus (6), which is placed inside said cargo container (19, which method comprises:
- extending outside the cargo container (1) by means of the lift and transfer apparatus (6),
- gripping to the transfer platform (2) where the car (8) is attached to, by means of the lift and support apparatus (6),
- lifting said transfer platform (2) that is outside the cargo container (1) and the car (8, 62) inside the cargo container (1) by means of the lift and transfer apparatus (6), and
- locking the transfer platform (2) inside the cargo container (1) at a desired height and in a desired position.

17. The method according to claim 16, **characterized in that** one or more tyreless or rimless cars (62) are loaded to the cargo container (19 for delivery to a retail dealer.

18. The method according to claim 16 or 17, **characterized in that** cars (8, 62) are transferred from the assembly plant (52) to an elevated storage (58) by means of the transfer platforms (2), the cars (8, 62) are stored and handled in said elevated storage (58) by means of the transfer platforms (2), and the cars (8, 62) are transferred by means of the transfer platforms (2) from said elevated storage (58) to a loading station (53) to containers (1) for loading.

19. The method according to any of the claims 16 to 18, **characterized in that** several cargo containers (1) are placed in the loading station (53) of an assembly plant (52), and in each cargo container (1) are compiled the cars (8, 62) to be delivered to one or more retail dealers (55).

20. The method according to any of the claims 16 to 19, **characterized in that**
- the cargo container (1) is fitted, for example, to a container transport trailer (37) for transporting the cars (8, 62) to a retail dealer, and
- the one or more transfer platforms (2) with cars (8) inside the container (1) are unloaded outside the cargo container (1) by means of the lift and transfer apparatus (6) for delivery to the retail dealer.

21. The method according to any of the claims 16 to 20, **characterized in that** the lift and transfer apparatus (6) of an empty cargo container (1) is packed inside the cargo container (1) to the upper part of the cargo container (1) in a space, which corresponds to the height difference between a standard container and a so-called High Cube container.

22. The method according to any of the claims 16 to 21, **characterized in that** one or more car bodies (56), modules, other parts, or other cargo (57) is loaded for transport in the cargo container, which cargo is attached on said transfer platform (2), and the lift and transfer apparatus (6) of the cargo container (1) is used in the loading.

23. The method according to any of the claims 16 to 22, **characterized in that** a 20' HC sea container, a 40' HC sea container, a 45' HC sea container, a 48' USA container, or a 53' USA container is used.

24. The use of a transport unit for unloading one or more cars from a transport unit (1) fitted into a transport trailer, **characterized in that** the transport unit (1) fitted into the transport trailer (37) comprises a lift and transfer apparatus (6), which is placed inside said transport unit (1), wherein the method comprises:
- extending outside the transport unit (1) by means of the lift and transfer apparatus (6),
- gripping to the transfer platform (2) on top of which the car (8) rests, and via which the car (8) is locked inside the transport unit at a desired height and in a desired position,
- lifting said transfer platform (2) and the car (8, 62) inside the transport unit (1) outside the transport unit (1) by means of the lift and transfer apparatus (6), and
- lowering the transfer platform (2) and the car (8) by means of the lift and transfer apparatus (6) to the same level where the transport trailer (37) is, for example, to the ground, and which is lower than the transport unit (1).
